# EUROPEAN PATENT SPECIFICATION

(11) **EP 0 956 268 B1**
(45) Date of publication and mention of the grant of the patent: **27.03.2002**
(21) Application number: 97912071.4
(22) Date of filing: 14.11.1997
(51) Int. Cl.: C02F 1/20, C02F 1/04, B01D 19/00, B01D 1/00, F25J 3/02

(54) **METHOD AND APPARATUS FOR SEPARATING VOLATILE COMPONENTS FROM A LIQUID**
METHODE UND VORRICHTUNG ZUR ABTRENNUNG VON FLÜCHTIGEN KOMPONENTEN AUS EINER FLÜSSIGKEIT
PROCEDE ET DISPOSITIF DE SEPARATION DE CONSTITUANTS VOLATILS A PARTIR D'UN LIQUIDE

(30) Priority: 15.11.1996 DK 128896
(43) Date of publication of application: 17.11.1999
(73) Proprietor: FUNKI MANURA A/S, 6400 Sonderborg (DK)
(72) Inventor: BASTHOLM, Jeppe, Christian, DK-6400 Soenderborg (DK); GRAMKOW, Asger, DK-6440 Augustenborg (DK)
(74) Representative: Nielsen, Leif
(86) International application number: DK9700521
(87) International publication number: WO9822394

(56) References cited:
- EP-A- 0 412 377
- WO-A-92/03203
- US-A- 4 911 845

## Description

The present invention relates to a method of purifying a liquid that contains more volatile components and less volatile components during evaporation of mixed liquids, wherein the liquid is heated to the boiling point in a boiler, and wherein the vapours are purified of undesirable gaseous components in the form of the more volatile components, after which the purified gases are condensed by heat exchange with unpurified vapours, while the less volatile components are concentrated in the boiler.

The invention also relates to an apparatus for use by the method.

The present invention will now be explained in detail in the context of the problems associated with the purification of biological waste water, preferably in the form of manure, during an evaporation process. The evaporation process will preferably be a vapour compression process. However, the evaporation process may also take place without compression of vapours, which are formed in the boiler and which are subsequently conducted to the heat exchanger for condensation.

The method and the apparatus according to the invention may also be used for the purification of other liquids.

When evaporating liquid containing more volatile components and less volatile components, it is desirable for the amount of more volatile components to be as small as possible. This is due to the fact that the more volatile components often consist of gases that are not condensable at a pressure and temperature corresponding to the temperature and pressure for the evaporation of the basic liquid of the mixture, which is ordinarily water. The non-condensable components will impede the evaporation of water as they place themselves as an insulating layer in the heat exchanger and thus impede the heat transmission to the condensable components in the heat exchanger. This will cause an energy consumption increase.

Especially when evaporating biological waste containing carbon dioxide and ammonia as more volatile components and fatty acids and mineral salts as less volatile components, it is desirable to reduce the contents of carbon dioxide and ammonia in the liquid.

On removal of carbon dioxide and ammonia from the liquid it can be better prepared for the purification taking place during evaporation, in which it is desired to separate as large amounts of pure water vapour as possible and to obtain the largest possible concentration in the boiler. Such a process may run batch-wise or more or less continuously either by a batch-wise or continuous exchange of the concentrated mixture in the boiler.

Thus, through the evaporation process it is desired to obtain as high a share of water vapour as possible since the non-condensable components, such as carbon dioxide, will take space from the water vapour as the non-condensable gases are carried along from the boiler to the heat exchanger. In a compression step, if any, this will lead to an increased energy consumption for the compression. Furthermore, as mentioned above, the heat transmission in the heat exchanger is impeded. For these reasons it is desirable to remove carbon dioxide before the evaporation is performed. It is also desirable to remove and bind carbon dioxide in order to prevent environmental pollution.

It has previously been proposed to separate ammonia before the vapours are let into the heat exchanger by taking them through a scrubber. Although this has proven effective, it involves disadvantages, however, since it requires the addition of various chemicals. This leads to an increase of the purification costs.

The ammonia contained in the biological waste is generally undesirable in the evaporation process due to pollution of the evaporated liquid. As ammonia will evaporate and may condense with the water vapour in the heat exchanger, the condensate will be polluted with ammonia. If the condensate is to be dischargeable directly to a recipient, it will be necessary to remove the ammonia in a different manner. This may take place by the addition of chemicals. This is necessary, but undesirable, since it requires further processing steps and will lead to heavy purification costs. It is desirable to reduce these costs by reducing the content of ammonia in the mixed liquid in order at least to reduce the chemical consumption in the scrubber.

During purification it is possible to perform a concentration of the less volatile components, such as fatty acids and mineral salts, in the basic liquid that remains in the boiler. This concentrated amount can be discharged from the boiler.

A method and an apparatus of the known type may be designed according to the teachings of international patent application No. WO 92/03203. The liquids that may be purified by a method according to the present invention, in addition to biological waste water, which among other things comprises manure, may also comprise emulsified liquids, such as cooling/lubricating oil emulsions, degreasing water, oil containing wastewater, wastewater from laundries, solvents and wastewater from food production and the like.

The object of the present invention is to provide a method and an apparatus for purifying liquids, wherein it is possible to remove more volatile components before an evaporation takes place, and wherein a low energy consumption and little use of chemicals for separation of the volatile components is obtained as the more volatile and the less volatile components can be brought to react and form useful substances, and said method and said apparatus being particularly suited for use in the purification of biological wastewater.

This object is obtained according to the present invention by a method that is characterised in that the liquid is heated before it is degassed, that degassing takes place by conducting the liquid to a column where the more volatile and less volatile components are separated and from which column the more volatile components in the form of vapour are conducted to a primary side of a first heat exchanger so that the more volatile components are condensed and discharged from the primary side, and from which column the less volatile components in the form of liquid are conducted to a secondary side of said first heat exchanger where they are heat exchanged with the condensed more volatile components so that further fractions of more volatile components are evaporated in the secondary side and conducted to said column, from where, in the form of vapour, they are conducted to the primary side of said first heat exchanger, and that after complete or partial separation of the more volatile components the heated liquid is conducted to the boiler.

An apparatus for use by the method and comprising a boiler and a heat exchanger is characterised in that the apparatus further comprises:
- a column provided with an inlet for a liquid containing more volatile and less volatile components, a discharge for more volatile components, and an outlet for less volatile components, which outlet is connected to the boiler,
- a first heat exchanger provided with an inlet and an outlet of a primary side for the more volatile components and an inlet and an outlet of a secondary side for the less volatile components,
- a separator which is a gaseous/liquid separator for the gaseous and the liquid fractions of the more volatile components, and which has an inlet, which is connected with the outlet from the primary side for the more volatile components.

The method according to the invention is advantageous in that the more volatile components are separated from the liquid at a very low energy consumption. Some of the energy for heating the liquid is taken from the more volatile components after the more volatile components have been conducted through the outlet from the first heat exchanger. Initially the more volatile components are used for heating the less volatile components after the more volatile components have been conducted through the outlet from the column and subsequently compressed.

When conducting the compressed more volatile components through the primary side of the heat exchanger and the less volatile components through the secondary side of the heat exchanger, the compressed more volatile components will contribute to a heating of the less volatile components. This liquid, which contains less volatile components, may contain a further share of the more volatile components. Through several passages through the column and the heat exchanger the less volatile components will constantly be subjected to energy addition. In this manner the further share of the more volatile components will evaporate and be carried along to the column, from where they circulate to the primary side, where they condense.

During the energy transfer from the compressed more volatile components to the less volatile components a partial condensation of the more volatile components takes place and it becomes possible to separate a very large share of the more volatile components from the liquid mixture.

The more volatile components will often partly condense in the heat exchanger. This liquid/gas mixture is conducted to the separator. In this manner the more volatile components are separated into a gaseous fraction and a liquid fraction. The liquid fraction is conducted back to the column for repeated treatment as discussed above (reflux). The gaseous fraction condenses and is conducted back to the container for use, e.g. as concentrated fertiliser. The gaseous fraction may be conducted via a third heat exchanger, where a condensation takes place during heating of the incoming liquid mixture.

Particularly in the context of evaporation of liquid biological waste, e.g. manure, containing among other things carbon dioxide, CO₂, and ammonia, NH₃, as more volatile components it is necessary to conduct the more volatile components to a third heat exchanger for condensation. During condensation the carbon dioxide is brought to react with the ammonia for the formation of ammonium hydrogen carbonate, NH₄HCO₃. The ammonium hydrogen carbonate may be stored in an ordinary closed container and, therefore, it is subsequently conducted to a container for use as a fertiliser component.

The liquid biological waste, e.g. in the form of manure, must be given a temperature corresponding to the boiling point of the liquid biological waste. For manure containing carbon dioxide and ammonia it is necessary for the temperature of the manure to be above 80°C as carbon dioxide is almost insoluble in a liquid at temperatures above 80°C. When the temperature in the column is above the boiling point e.g. of the manure, the carbon dioxide cannot perform an ionic bond. This causes the carbon dioxide to exit from the liquid at the following equilibrium:

HCO₃⁻ < > OH⁻ + CO₂

It is seen that this equilibrium results in an alkaline reaction. This alkaline reaction causes the ammonium to be more volatile and likewise exit from the liquid at the following equilibrium

NH₄⁺ + OH⁻ < > NH₃ + H₂O

By the method and the apparatus according to the invention it is possible in liquid biologic waste to remove up to at least 99% of the carbon dioxide and up to at least 75% of the ammonia. This has been achieved in experiments with manure having an ammonium content of 5000 mg/l.

As the ammonia content is reduced considerably, there will be a substantial saving in the chemical consumption for removal of the remaining ammonia content, e.g. in a scrubber. In this manner a cost saving is achieved in the purification.

In a preferred embodiment the apparatus is characterised in that it further comprises a compressor, which is arranged between the outlet in the column for the more volatile components and the inlet of the first heat exchanger for the more volatile components, and that it further comprises
- a second heat exchanger having an inlet to a primary side from the outlet of the primary side of the first heat exchanger, an outlet from the primary side, an inlet to a secondary side for the liquid containing the more volatile components and the less volatile components, and an outlet from the secondary side for the liquid containing the more volatile components and the less volatile components, wherein the outlet from the primary side is in connection with the inlet to the separator, and
- a third heat exchanger with an inlet to a primary side for a gaseous fraction of the more volatile components from an outlet from the separator and an outlet from the primary side for a condensate of the more volatile components.

The invention will now be explained in detail with reference to the accompanying drawing, wherein
- Fig. 1: shows a plant for waste water processing and comprising an apparatus according to the invention,
- Fig. 2: shows a partial view of part of the plant shown in Fig. 1, and
- Fig. 3: shows a partial view corresponding to Fig. 2 but of a second embodiment of the apparatus according to the invention.

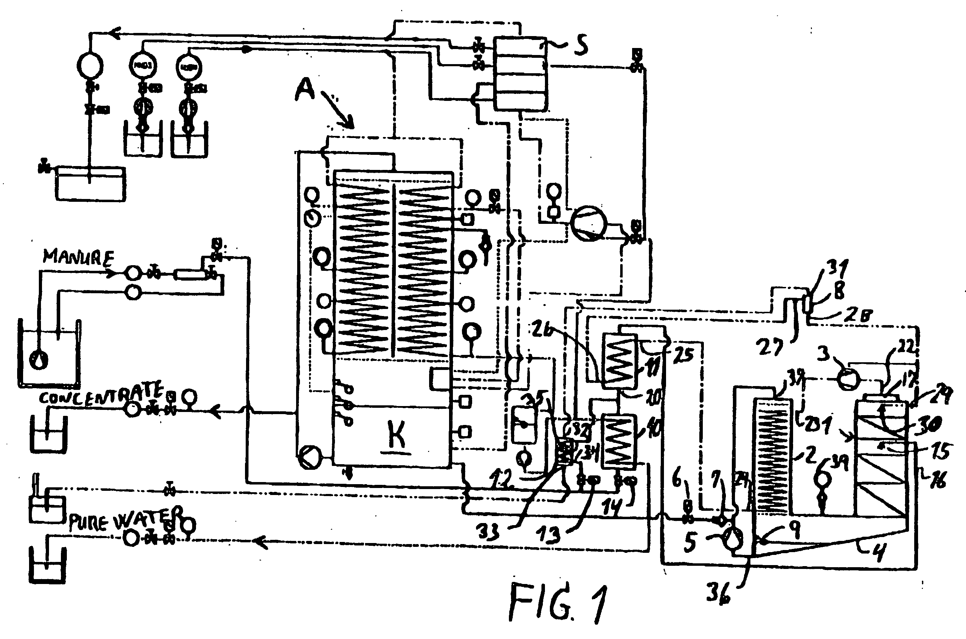

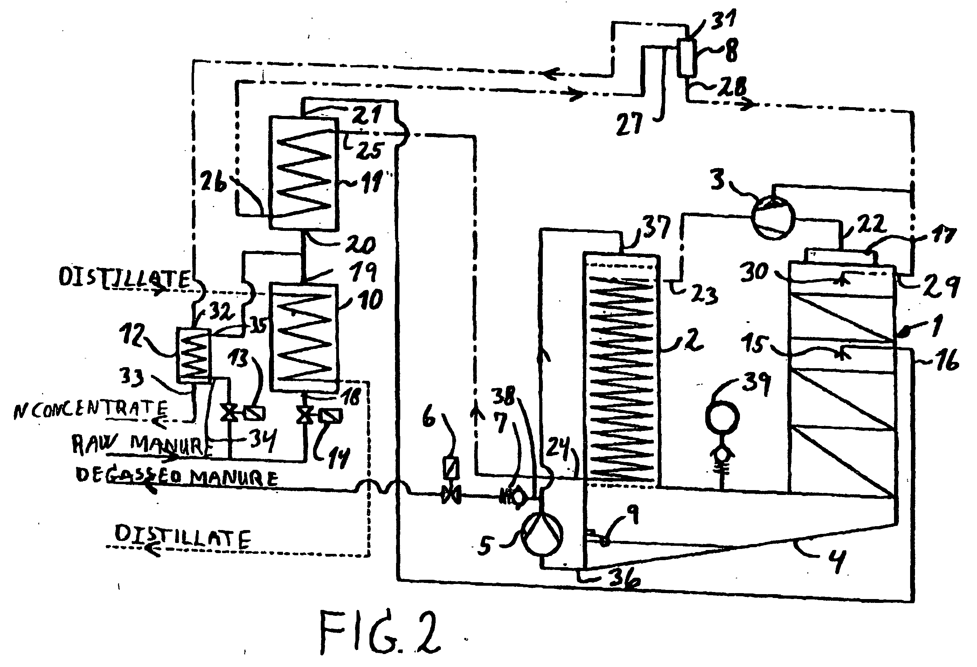

Figure 2 of the drawing constitutes a part of Fig. 1. Both figures will be explained simultaneously. Fig. 1 shows a plant designed to handle biological wastewater in the form of manure. In Fig. 1 the unit designated with an A is a plant of the type described in international patent application WO 92/03203.

In principle, the apparatus according to the invention may be said to constitute one unit, wherein a degassing is performed on the manure present in the boiler K of the apparatus A. Hereby it is possible to reduce the chemical consumption in the scrubber S of the plant.

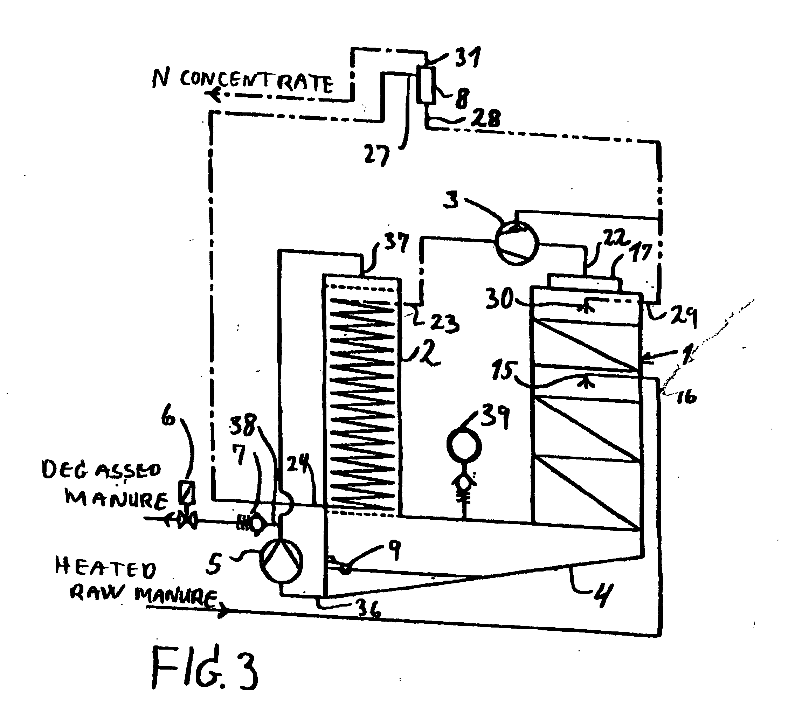

The functioning of the main plant will not be described in detail. The description will focus on the part of the plant shown in Figs. 2 and 3, which show a first and a second embodiment, respectively, of an apparatus according to the invention.

Fig. 1 is a schematic view of an embodiment of an apparatus according to the invention. The apparatus comprises a column 1, a first heat exchanger 2, a compressor 3, a vessel 4 for the column 1, a circulation pump 5, a motor valve 6, a check valve 7, a gas/liquid separator 8, a level sensor 9 for control of the liquid level in the vessel 4, a first section 10 of a second heat exchanger, a second section 11 of the second heat exchanger, a third heat exchanger 12, a first motor valve 13 and a second motor valve 14. The column 1 is provided with nozzles 15 for discharge of liquid biological waste in the column 1.

The column I is provided with an inlet 16 for the liquid biological waste. As an example of liquid biological waste the following part of the description will use manure. The manure is conducted to the column 1 to be separated in the column 1 into more volatile components and less volatile components. The more volatile components are conducted to a foam inhibitor 17 in the upper part of the column 1. The less volatile components are conducted to the vessel 4 in the bottom of the column 1. When the liquid biological waste is manure, the more volatile components comprise among other things carbon dioxide, CO₂, and ammonia, NH₃, and the less volatile components comprise among other things water (H₂O), fatty acids and mineral salts.

Before the manure is conducted to the column 1, the manure is heated as it is conducted through a secondary side of the first section 10 and a secondary side of the second section 11 of the second heat exchanger. The first section 10 of the second heat exchanger is provided with an inlet 18 for the manure. The inlet 18 is provided with the motor valve 14 for inlet of manure to the first section 10. The first section 10 is provided with an outlet 19 leading to an inlet 20 to the second section 11 of the second heat exchanger. The second section 11 is provided with an outlet 21 leading to the inlet 16 to the column 1. The manure is to obtain a temperature rise to the boiling point of the manure before the manure is conducted to the nozzles 15 in the column 1.

After the manure has been conducted through the nozzles 15 in the column 1 and, as mentioned, has been separated into more volatile components and less volatile components, the more volatile components are conducted from an outlet 22 from the foam inhibitor 17 to the compressor 3, where the more volatile components are compressed. After the more volatile components have been compressed, the more volatile components are conducted to an inlet 23 of a primary side of the first heat exchanger 2. The more volatile components are conducted through the primary side of the first heat exchanger 2 and to an outlet 24 of the primary side of the first heat exchanger 2. The more volatile components are then conducted to an inlet 25 of a primary side of the second section 11 of the second heat exchanger. The more volatile components are conducted through the primary side of the second section 11 and to an outlet 26 of the second section 11.

After having been conducted through the primary side of the first heat exchanger and the second section 11 of the second heat exchanger, respectively, the more volatile components have partly condensed and consist of a gaseous fraction and a liquid fraction. From the outlet 26 of the primary side of the second section of the second heat exchanger the gaseous fraction and the liquid fraction of the more volatile components are conducted to an inlet 27 to the gas/liquid separator 8.

The liquid fraction is conducted from an outlet 28 of the separator 8 to an inlet 29 for the liquid fraction and to nozzles 30 in the column 1 as reflux. The gaseous fraction of the more volatile components is conducted from an outlet 31 to an inlet 32 to a primary side of the third heat exchanger 12. In the third heat exchanger 12 a complete condensation of the gaseous fraction takes place. During condensation of the gaseous fraction carbon dioxide, CO₂, diffuses into the liquid and together with water, H₂O, and ammonia, NH₃ ammonium hydrogen carbonate, NH₄HCO₃, is formed. The ammonium hydrogen carbonate is conducted to an outlet 33 from the primary side of the third heat exchanger and may be stored in an ordinary closed container (not shown) and discharged from there.

Parts of the manure that are conducted to the second heat exchanger are initially conducted to a secondary side of the third heat exchanger 12. The manure is conducted to an inlet 34 of the secondary side of the third heat exchanger 12 by means of the motor valve 13 to an outlet 35 from the secondary side. From the outlet 35 of the secondary side of the third heat exchanger 12 the manure is conducted to the inlet 20 of the secondary side of the second section 11 of the second heat exchanger.

The less volatile components are conducted, as mentioned, to the vessel 4. From the outlet 36 from the vessel the less volatile components are conducted in liquid form by means of a circulation pump 5 to an inlet 37 of a secondary side of the first heat exchanger 2. The level sensor 9 in the vessel 4 ensures that the less volatile components are not conducted from the vessel 4 until a sufficient amount of the less volatile components is present in the vessel 4. The less volatile components are conducted through the secondary side of the first heat exchanger 2, for evaporation of any remaining more volatile components, and back to the vessel 4. At intervals, during the circulation of the less volatile components from the vessel 4 and through the secondary side of the first heat exchanger 2, parts of the liquid containing the less volatile components will be discharged. Discharge takes place through an outlet 38, through the check valve 7 and the motor valve 6. The part of the liquid containing the less volatile components that is discharged may be described as degassed, i.e. free of more volatile components, and may be conducted on to further treatment, if any, such as evaporation.

During compression in the compressor 3 the more volatile components will reach a temperature that is higher than the temperature of the manure conducted to the nozzles 15 in the column 1.

An energy liberation takes place when the more volatile components are conducted through the primary side of the first heat exchanger 2, through the second section 11 of the second heat exchanger and after separation in the separator 8 through the primary side of the third heat exchanger 12. During energy liberation a partial or complete condensation of the less volatile components takes place.

An energy absorption takes place when the manure is conducted through the secondary side of the third heat exchanger 12 and through the secondary side of the second section 11 of the second heat exchanger. During energy absorption a temperature rise of the manure takes place.

En energy absorption takes place when the less volatile components are conducted through the secondary side of the first heat exchanger. During energy absorption a temperature rise of the less volatile components takes place. If energy transfer from the more volatile components in the primary side of the first heat exchanger 2 to the less volatile components in the secondary side of the first heat exchanger 2 is not sufficient, it is possible by means of a secondary energy induction device 39 to induce a further temperature rise into the less volatile components.

The apparatus illustrated in Fig. 3 differs from the apparatus shown in Fig. 2 in that the heat exchangers 10, 11, 12 have been left out. Thus, in Fig. 3 the raw manure will be input directly into the column 1 without prior heat exchange in a heat exchanger corresponding to the heat exchangers 10, 11, 12. It should be noted, however, that the raw manure must have been subjected to a heating so that its temperature is in the vicinity of the boiling point before it is let into the column 1. Furthermore, the gas/liquid mixture discharged from the heat exchanger 2 will be conducted directly to the gas/liquid separator 8, from where a liquid fraction containing a concentrated amount of nitrogen compounds is discharged in the form of vapour and where a liquid fraction is conducted back to the column 1.

In the embodiments shown the apparatus is illustrated with a compressor 3. The compressor 3 is inserted to use a vapour compression principle in the apparatus shown in Figs. 2 and 3. However, the apparatus according to the invention may also be produced without the compressor 3. In such an embodiment the energy economy would be slightly poorer.

The invention has been described above with reference to two specific embodiments of an apparatus according to the invention. Also, other biological waste materials than manure may be treated by the method according to the invention and by means of the apparatus according to the invention.

## Claims

1. A method of purifying a liquid that contains more volatile components and less volatile components during evaporation of mixed liquids, wherein the liquid is heated to the boiling point in a boiler (K), and wherein the vapours are purified of undesirable gaseous components in the form of the more volatile components, after which the purified gases are condensed by heat exchange with unpurified vapours, while the less volatile components are concentrated in the boiler, **characterised in that** the liquid is heated before it is degassed, that degassing takes place by conducting the liquid to a column where the more volatile and less volatile components are separated and from which column the more volatile components in the form of vapour are conducted to a primary side of a first heat exchanger so that the more volatile components are condensed and discharged from the primary side, and from which column the less volatile components in the form of liquid are conducted to a secondary side of said first heat exchanger where they are heat exchanged with the condensed more volatile components so that further fractions of more volatile components are evaporated in the secondary side and conducted to said column, from where, in the form of vapour, they are conducted to the primary side of said first heat exchanger, and that after complete or partial separation of the more volatile components the heated liquid is conducted to the boiler.

2. A method according to claim 1, **characterised in that** resulting components, in the form of condensate and remaining gases, from the discharge of the primary side are conducted to a gas/liquid separator, and that a liquid fraction from here is returned to the column while a gaseous fraction from here with a concentration of the more volatile components is collected for use.

3. A method according to claim 1 or 2, **characterised in that** the more volatile components are compressed before the heat exchange step.

4. A method according to claim 1, 2 or 3, **characterised in that** the more volatile components comprise carbon dioxide and ammonia, and that the less volatile components comprise water, fatty acids and mineral salts.

5. A method according to any one of the preceding claims, **characterised in that** the more volatile components are conducted from the primary side of the first heat exchanger to a primary side of a second heat exchanger and on to the separator, preferably from the first heat exchanger to a primary side of a first section of a second heat exchanger, on to a primary side of a second section of the second heat exchanger and on to the separator.

6. A method according to claim 4, **characterised in that** the gaseous fraction of the more volatile components is conducted from the separator to a primary side of a third heat exchanger, that the gaseous fraction is retained in the heat exchanger, that a temperature of the gaseous fraction is lowered to a temperature not exceeding the condensation temperature of ammonia, that the ammonia is condensed to a condensate, that carbon dioxide is diffused into the condensate, and that the carbon dioxide is made to react with the ammonia for formation of ammonium hydrogen carbonate.

7. A method according to any one of the preceding claims, **characterised in that** the liquid containing the more volatile components and the less volatile components is conducted to a secondary side of the second heat exchanger, preferably to a secondary side of the second heat exchanger and to a secondary side of the third heat exchanger, most preferably to a secondary side of a first section of the second heat exchanger, to a secondary side of a second section of the second heat exchanger and to a secondary side of the third heat exchanger.

8. An apparatus for use by the method according to any one of the preceding claims and comprising a boiler and a heat exchanger, **characterised in that** the apparatus further comprises
- a column provided with an inlet for a liquid containing more volatile and less volatile components, a discharge for more volatile components, and an outlet for less volatile components, which outlet is connected to the boiler,
- a first heat exchanger provided with an inlet and an outlet of a primary side for the more volatile components and an inlet and an outlet of a secondary side for the less volatile components,
- a separator which is a gaseous/liquid separator for the gaseous and the liquid fractions of the more volatile components, and which has an inlet, which is connected with the outlet from the primary side for the more volatile components.

9. An apparatus according to claim 8, **characterised in that** the apparatus further comprises a compressor, which is arranged between the outlet in the column for the more volatile components and the inlet of the first heat exchanger for the more volatile components.

10. An apparatus according to claim 8 or 9, **characterised in that** it further comprises
- a second heat exchanger having an inlet to a primary side from the outlet of the primary side of the first heat exchanger, an outlet from the primary side, an inlet to a secondary side for the liquid containing the more volatile components and the less volatile components, and an outlet from the secondary side for the liquid containing the more volatile components and the less volatile components, wherein the outlet from the primary side is in connection with the inlet to the separator, and
- a third heat exchanger with an inlet to a primary side for a gaseous fraction of the more volatile components from an outlet from the separator and an outlet from the primary side for a condensate of the more volatile components.

## Patentansprüche

1. Verfahren zum Reinigen einer Flüssigkeit, die stärker flüchtige Komponenten und weniger stark flüchtige Komponenten enthält, während der Verdampfung gemischter Flüssigkeiten, wobei die Flüssigkeit bis zum Siedepunkt in einem Kessel (K) erhitzt wird und wobei die Dämpfe von unerwünschten gasförmigen Komponenten in Form von stärker flüchtigen Komponenten gereinigt werden, worauf die gereinigten Gase durch Wärmetausch mit ungereinigten Dämpfen kondensiert werden, während die weniger stark flüchtigen Komponenten im Kessel konzentriert werden, **dadurch gekennzeichnet, dass** die Flüssigkeit erhitzt wird, bevor sie entgast wird, dass das Entgasen durch Leiten der Flüssigkeit zu einer Säule durchgeführt wird, wo die stärker flüchtigen und weniger stark flüchtigen Komponenten getrennt werden und von welcher Säule die stärker flüchtigen Komponenten in Form von Dampf zu einer ersten Seite eines ersten Wärmetauschers geleitet werden, so dass die stärker flüchtigen Komponenten zur Kondensation gebracht und von der ersten Seite aus abgeleitet werden, und von welcher Säule die weniger stark flüchtigen Komponenten in Form von Flüssigkeit zu einer zweiten Seite des ersten Wärmetauschers geleitet werden, wo ein Wärmetausch mit den kondensierten stärker flüchtigen Komponenten stattfindet, so dass weitere Fraktionen stärker flüchtiger Komponenten auf der zweiten Seite zur Verdampfung gebracht und der Säule zugeleitet werden, von wo aus sie in Form von Dampf zur ersten Seite des ersten Wärmetauschers geleitet werden, und dass nach vollständiger oder teilweiser Abtrennung der stärker flüchtigen Komponenten die erhitzte Flüssigkeit dem Kessel zugeleitet wird.

2. Verfahren nach Anspruch 1, **dadurch gekennzeichnet, dass** die entstehenden Komponenten in Form von Kondensat und verbleibenden Gasen von der Ableitung der ersten Seite einem Gas/Flüssigkeitsabscheider zugeführt werden, und dass eine flüssige Fraktion von dort zur Säule zurückgeführt wird, während eine gasförmige Fraktion von dort mit einer Konzentration der stärker flüchtigen Komponenten für die Verwendung gesammelt wird.

3. Verfahren nach Anspruch 1 oder 2, **dadurch gekennzeichnet, dass** die stärker flüchtigen Komponenten vor dem Schritt des Wärmeaustauschens komprimiert werden.

4. Verfahren nach Anspruch 1, 2 oder 3, **dadurch gekennzeichnet, dass** die stärker flüchtigen Komponenten Kohlendioxid und Ammoniak aufweisen, und dass die weniger stark flüchtigen Komponenten Wasser, Fettsäuren und Mineralsalz aufweisen.

5. Verfahren nach einem der vorstehenden Ansprüche, **dadurch gekennzeichnet, dass** die stärker flüchtigen Komponenten von der ersten Seite des ersten Wärmetauschers zu einer ersten Seite eines zweiten Wärmetauschers und weiter zum Abscheider geleitet werden, vorzugsweise vom ersten Wärmetauscher zu einer ersten Seite eines ersten Abschnitts eines zweiten Wärmetauschers bis zu einer ersten Seite eines zweiten Abschnitts des zweiten Wärmetauschers und weiter zum Abscheider.

6. Verfahren nach Anspruch 4, **dadurch gekennzeichnet, dass** die gasförmige Fraktion der stärker flüchtigen Komponenten vom Abscheider zu einer ersten Seite eines dritten Wärmetauschers geleitet wird, dass die gasförmige Fraktion im Wärmetauscher gehalten wird, dass eine Temperatur der gasförmigen Fraktion bis zu einer Temperatur abgesenkt wird, die die Kondensationstemperatur von Ammoniak nicht übersteigt, dass das Ammoniak zu einem Kondensat kondensiert wird, dass Kohlendioxid zur Diffusion in das Kondensat gebracht wird, und dass das Kohlendioxid für die Bildung von Ammoniumhydrogenkarbonat mit dem Ammoniak zur Reaktion gebracht wird.

7. Verfahren nach mindestens einem der vorstehenden Ansprüche, **dadurch gekennzeichnet, dass** die Flüssigkeit, die die stärker flüchtigen Komponenten und die weniger stark flüchtigen Komponenten enthält, zu einer zweiten Seite des zweiten Wärmetauschers geleitet wird, vorzugsweise zu einer zweiten Seite des zweiten Wärmetauschers und zu einer zweiten Seite des dritten Wärmetauschers, bevorzugt zu einer zweiten Seite eines ersten Abschnitts des zweiten Wärmetauschers, zu einer zweiten Seite eines zweiten Abschnitts des zweiten Wärmetauschers und zu einer zweiten Seite des dritten Wärmetauschers.

8. Vorrichtung zur Verwendung im Verfahren nach einem der vorstehenden Ansprüche, aufweisend einen Kessel und einen Wärmetauscher, **dadurch gekennzeichnet, dass** die Vorrichtung des weiteren folgendes aufweist:
- eine Säule, die mit einem Einlaß für eine Flüssigkeit, die stärker flüchtige und weniger stark flüchtige Komponenten enthält, einer Ableitung für stärker flüchtige Komponenten und einem Auslaß für weniger stark flüchtige Komponenten ausgestattet ist, welcher Auslaß mit dem Kessel verbunden ist,
- einen ersten Wärmetauscher, der mit einem Einlaß und einem Auslaß einer ersten Seite für die stärker flüchtigen Komponenten und einem Einlaß und einem Auslaß einer zweiten Seite für die weniger stark flüchtigen Komponenten versehen ist,
- einen Abscheider, der ein Gas-/Flüssigkeitsabscheider für die gasförmigen und die flüssigen Fraktionen der stärker flüchtigen Komponenten ist und der einen Einlaß aufweist, welcher mit dem Auslaß aus der ersten Seite für die stärker flüchtigen Komponenten verbunden ist.

9. Vorrichtung nach Anspruch 8, **dadurch gekennzeichnet, dass** sie einen Kompressor aufweist, der zwischen dem Auslaß in der Säule für die stärker flüchtigen Komponenten und dem Einlaß des ersten Wärmetauschers für die stärker flüchtigen Komponenten angeordnet ist.

10. Vorrichtung nach Anspruch 8 oder 9, **dadurch gekennzeichnet, dass** sie folgendes aufweist:
- einen zweiten Wärmetauscher mit einem Einlaß zu einer ersten Seite vom Auslaß der ersten Seite des ersten Wärmetauschers aus, einem Auslaß von der ersten Seite, einem Einlaß zu einer zweiten Seite für die Flüssigkeit, die die stärker flüchtigen Komponenten und die weniger stark flüchtigen Komponenten enthält, und einem Auslaß aus der zweiten Seite für die Flüssigkeit, die die stärker flüchtigen Komponenten und die weniger stark flüchtigen Komponenten enthält, wobei der Auslaß aus der ersten Seite in Verbindung mit dem Einlaß des Separators steht, und
- einen dritten Wärmetauscher mit einem Einlaß zu einer ersten Seite für eine gasförmige Fraktion der stärker flüchtigen Komponenten von einem Auslaß vom Separator und einem Auslaß von der ersten Seite für ein Kondensat der stärker flüchtigen Komponenten.

## Revendications

1. Un procédé de purification d'un liquide qui contient plus de constituants volatiles et moins de constituants volatiles pendant l'évaporation de mélange de liquides, dans lequel le liquide est chauffé au point d'ébullition dans une chaudière (K), et dans lequel les vapeurs sont purifiées de leurs constituants gazeux indésirables sous la forme des constituants plus volatiles, après quoi les gaz purifiés sont condensés par échange thermique avec des vapeurs non purifiées, alors que les constituants moins volatiles sont concentrés dans la chaudière, **caractérisé en ce que** le liquide est chauffé avant qu'il soit dégazé, que le dégazage se produit en conduisant le liquide vers une colonne où les constituants plus volatiles et moins volatiles sont séparés, colonne à partir de laquelle les constituants plus volatiles sous la forme de vapeur sont conduits vers un côté primaire d'un premier échangeur de chaleur de sorte que les constituants plus volatiles sont condensés et déchargés depuis le côté primaire, et colonne à partir de laquelle les constituants moins volatiles sous la forme d'un liquide sont conduits vers un côté secondaire dudit premier échangeur de chaleur où ils sont soumis à un échange thermique avec les constituants plus volatiles condensés de sorte que d'autres fractions de constituants plus volatiles sont évaporées dans le côté secondaire et conduites vers ladite colonne, à partir d'où, sous la forme de vapeur, ils sont conduits vers le côté primaire dudit premier échangeur de chaleur, et qu'après séparation complète ou partielle des constituants plus volatiles, le liquide chauffé est conduit vers la chaudière.

2. Un procédé selon la revendication 1, **caractérisé en ce que** les constituants résultants, sous la forme d'un condensat et de gaz restants, provenant de la décharge du côté primaire sont conduits vers un séparateur gaz/liquide, et **en ce qu'**une fraction liquide est, de là, ramenée vers la colonne alors qu'une fraction gazeuse est, de là recueillie avec une concentration des constituants plus volatiles, pour être utilisés.

3. Un procédé selon la revendication 1 ou 2, **caractérisé en ce que** les constituants plus volatiles sont comprimés avant l'étape d'échange thermique.

4. Un procédé selon la revendication 1, 2 ou 3, **caractérisé en ce que** les constituants plus volatiles comprennent du dioxyde de carbone et de l'ammoniac, et **en ce que** les constituants moins volatiles comprennent de l'eau, des acides gras et des sels minéraux.

5. Un procédé selon l'une quelconque des revendications précédentes, **caractérisé en ce que** les constituants plus volatiles sont conduits depuis le côté primaire du premier échangeur de chaleur jusqu'à un côté primaire d'un second échangeur de chaleur et vers le séparateur, de préférence depuis le premier échangeur de chaleur jusqu'à un côté primaire d'une première section d'un second échangeur de chaleur, vers un côté primaire d'une seconde section du second échangeur de chaleur et vers le séparateur.

6. Un procédé selon la revendication 4, **caractérisé en ce que** la fraction gazeuse des constituants plus volatiles est conduite depuis le séparateur vers un côté primaire d'un troisième échangeur de chaleur, **en ce que** la fraction gazeuse est maintenue dans l'échangeur de chaleur, **en ce qu'**une température de la fraction gazeuse est abaissée à une température ne dépassant pas la température de condensation de l'ammoniac, **en ce que** l'ammoniac est condensé pour donner un condensat, **en ce que** le dioxyde de carbone est diffusé dans le condensat, et **en ce que** le dioxyde de carbone est amené à réagir avec l'ammoniac pour la formation de carbonate d'ammonium hydrogéné.

7. Un procédé selon l'une quelconque des revendications précédentes, **caractérisé en ce que** le liquide contenant les constituants plus volatiles et les constituants moins volatiles est conduit vers un côté secondaire du second échangeur de chaleur, de préférence vers un côté secondaire du second échangeur de chaleur et vers un côté secondaire du troisième échangeur de chaleur, de manière davantage préférée vers un côté secondaire d'une première section du second échangeur de chaleur, vers un côté secondaire d'une seconde section du second échangeur de chaleur et vers un côté secondaire du troisième échangeur de chaleur.

8. Un appareil utilisable pour le procédé selon l'une quelconque des revendications précédentes et comprenant une chaudière et un échangeur de chaleur, **caractérisé en ce que** l'appareil comprend en outre :
- une colonne présentant une entrée pour un liquide contenant des constituants plus volatiles et moins volatiles, une décharge pour les constituants plus volatiles, et une sortie pour les constituants moins volatiles, sortie qui est reliée à la chaudière,
- un premier échangeur de chaleur présentant une entrée et une sortie d'un côté primaire pour les constituants plus volatiles et une entrée et une sortie d'un côté secondaire pour les constituants moins volatiles,
- un séparateur qui est un séparateur gaz/liquide pour la fraction gazeuse et la fraction liquide des constituants plus volatiles, et qui présente une entrée, laquelle est reliée à la sortie du côté primaire pour les constituants plus volatiles.

9. Un appareil selon la revendication 8, **caractérisé en ce que** l'appareil comprend en outre un compresseur, lequel est disposé entre la sortie prévue dans la colonne pour les constituants plus volatiles et l'entrée du premier échangeur de chaleur pour les constituants plus volatiles.

10. Un appareil selon la revendication 8 ou 9, **caractérisé en ce qu'**il comprend en outre :
- un second échangeur de chaleur présentant une entrée vers un côté primaire de la sortie du côté primaire du premier échangeur de chaleur, une sortie du côté primaire, une entrée vers un côté secondaire pour le liquide contenant les constituants plus volatiles et les constituants moins volatiles, et une sortie du côté secondaire pour le liquide contenant les constituants plus volatiles et les constituants moins volatiles, dans lequel la sortie du côté primaire est en liaison avec l'entrée du séparateur, et
- un troisième échangeur de chaleur avec une entrée vers un côté primaire pour une fraction gazeuse des constituants plus volatiles provenant d'une sortie du séparateur et une sortie du côté primaire pour un condensat des constituants plus volatiles.
